# EUROPEAN PATENT APPLICATION

(11) **EP 2 644 891 A1**
(43) Date of publication of application: **02.10.2013**
(21) Application number: 12194740.2
(22) Date of filing: 29.11.2012
(51) Int. Cl.: F03G 7/10

(54) **Torque flywheel device with energy transfer**

(30) Priority: 30.03.2012 EP 12401052
(71) Applicant: Pesko Industries, Pte., Ltd., Taichung City (TW); Ho, Fu-Hung, Taichung City (TW)
(72) Inventor: HO, Fu-Hung, Taichung City (TW)
(74) Representative: Patentanwälte Hosenthien-Held und Dr. Held

(57) **Abstract**

A torque flywheel device includes a frame unit (1) and a wheel unit (2) mounted on the frame unit. The frame unit includes a support frame (10), a first track (12), a second track (13) and a third track (15). The wheel unit includes a shaft (22), a flywheel (20), a plurality of connecting bars (23), multiple support ears (24), multiple swinging weights (25), multiple first driving arms (26), multiple second driving arms (27), and multiple rollers (29). Thus, each of the rollers on the respective first driving arm and the respective second driving arm is movable to abut the third track and is movable to abut the first track and the second track so as to pivot the respective first driving arm and the respective second driving arm and to pivot the respective swinging weight.

## Description

The present invention relates to a flywheel and, more particularly, to a torque flywheel device for a generator.

A conventional generator is used to produce electricity by using a natural power, such as the hydraulic power, the wind power, the solar energy, the sea energy, the bio-diesel energy and the like. Thus, the electric power produced by the conventional generator can be used by the people. However, the source of the natural power is unsteady so that the electric power cannot be produced by the conventional generator largely and steadily.

In accordance with the present invention, there is provided a torque flywheel device, comprising at least one frame unit and at least one wheel unit mounted on the frame unit. The frame unit includes a support frame, two bearings mounted on the support frame, a first fixing bracket mounted on a front of the support frame, a first track mounted on a top of the first fixing bracket, a second track mounted on the top of the first fixing bracket and located under the first track, a second fixing bracket mounted on a side of the support frame, and a third track mounted on an outer side of the second fixing bracket. The wheel unit includes a shaft rotatably mounted on the two bearings of the frame unit, a flywheel having a central portion provided with a hub mounted on the shaft so that the flywheel is rotatable freely on the support frame of the frame unit, a plurality of connecting bars each connected between the flywheel and the hub, a plurality of support ears each mounted on a respective one of the connecting bars, a plurality of swinging weights each pivotally mounted on a respective one of the support ears, a plurality of first driving arms each pivotally mounted on a respective one of the support ears, a plurality of second driving arms each pivotally mounted on a respective one of the support ears, and a plurality of rollers each rotatably mounted on a respective one of the first driving arms and a respective one of the second driving arms. The torque flywheel device further comprises a driving mechanism connected with a first end of the shaft of the wheel unit, a reduction box connected with a second end of the shaft of the wheel unit, and a generator connected with the reduction box. The driving mechanism includes a driven gear connected with the first end of the shaft of the wheel unit to rotate the shaft and the flywheel of the wheel unit, a drive motor connected with the generator, and a drive gear mounted on the drive motor and meshing with the driven gear to rotate the driven gear. The generator supplies a partial electric power to operate the drive motor. Each of the rollers on the respective first driving arm and the respective second driving arm is movable to pass and abut the third track of the frame unit and is movable to pass between and abut the first track and the second track of the frame unit so as to pivot the respective first driving arm and the respective second driving arm and to pivot the respective swinging weight.

The primary objective of the present invention is to provide a torque flywheel device with an energy transfer.

According to the primary advantage of the present invention, the two sides of the flywheel have different weights to form an unbalanced state so that the flywheel is rotated successively by the unbalanced state of the two sides of the flywheel.

Further benefits and advantages of the present invention will become apparent after a careful reading of the detailed description with appropriate reference to the accompanying drawings.

In the drawings:

FIG. 1 is a perspective view of a torque flywheel device in accordance with the preferred embodiment of the present invention.

FIG. 2 is an exploded perspective view of the torque flywheel device as shown in FIG. 1.

FIG. 3 is a partially exploded perspective view of the torque flywheel device as shown in FIG. 1.

FIG. 4 is a partially side view of the torque flywheel device as shown in FIG. 1.

FIG. 5 is a partially side cross-sectional view of the torque flywheel device as shown in FIG. 1.

FIG. 6 is a partially front operational view of the torque flywheel device as shown in FIG. 1.

FIG. 7 is a partially front operational view of the torque flywheel device as shown in FIG. 1.

FIG. 8 is a front operational view of the torque flywheel device as shown in FIG. 1.

FIG. 9 is a side view of a torque flywheel device in accordance with another preferred embodiment of the present invention.

FIG. 10 is a front view of the torque flywheel device as shown in FIG. 9.

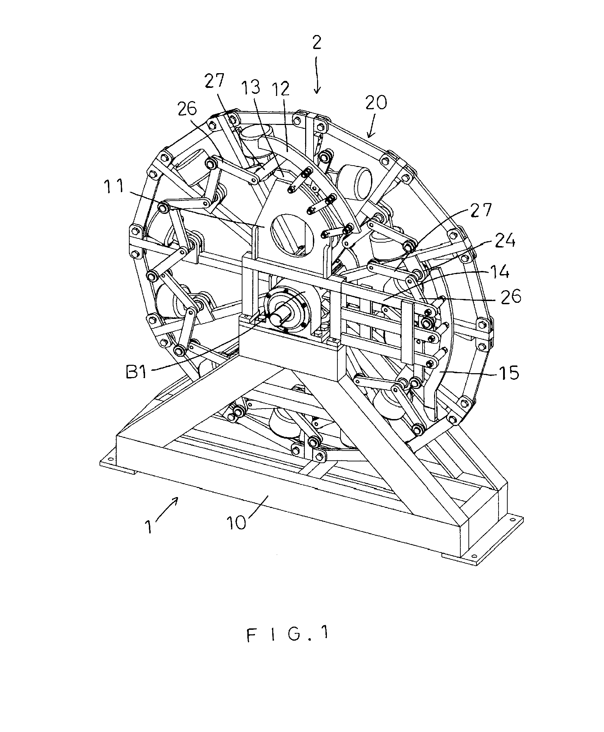

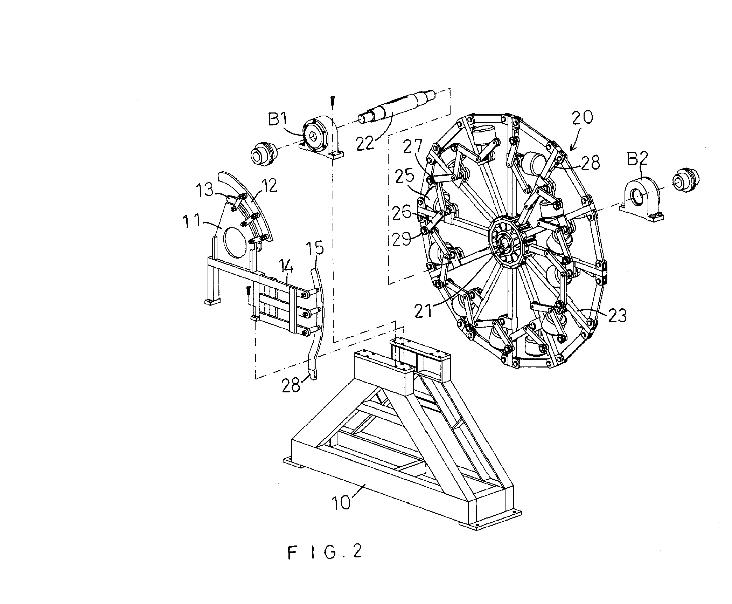

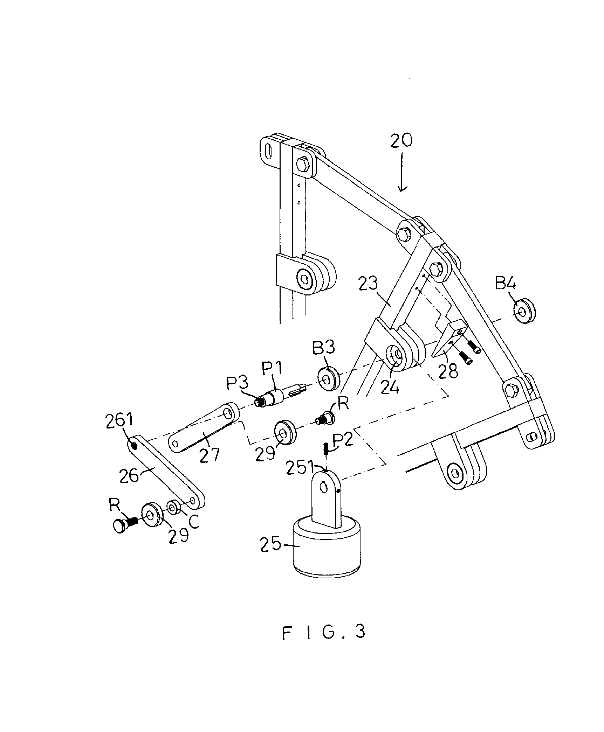

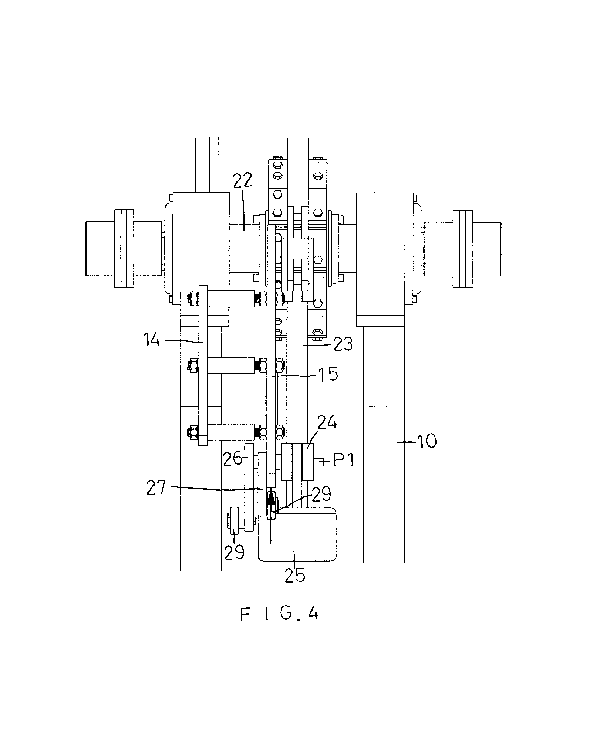

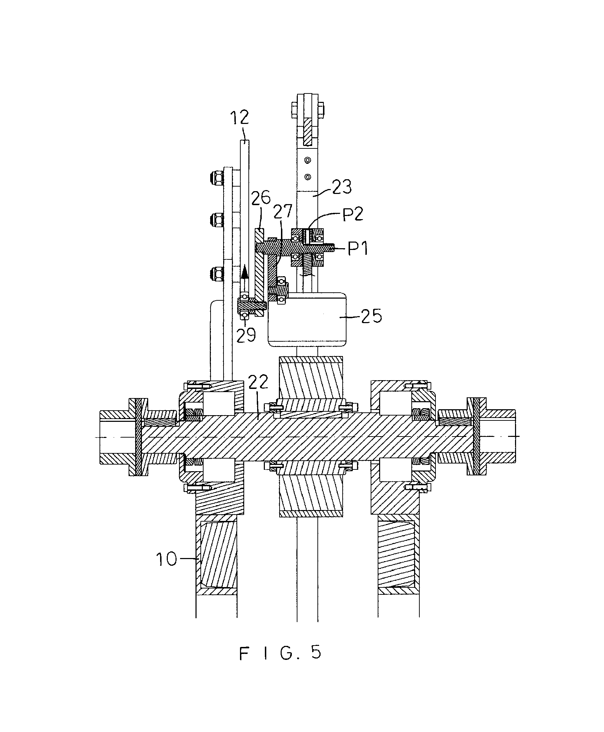

Referring to the drawings and initially to FIGS. 1-5, a torque flywheel device in accordance with the preferred embodiment of the present invention comprises at least one frame unit 1 and at least one wheel unit 2 mounted on the frame unit 1.

The frame unit 1 includes a support frame 10, two bearings B1 and B2 mounted on the support frame 10, a first fixing bracket 11 mounted on a front of the support frame 10, a first track 12 mounted on a top of the first fixing bracket 11, a second track 13 mounted on the top of the first fixing bracket 11 and located under the first track 12, a second fixing bracket 14 mounted on a side of the support frame 10, and a third track 15 mounted on an outer side of the second fixing bracket 14.

The first track 12 of the frame unit 1 has a substantially arc-shaped profile. The second track 13 of the frame unit 1 has a substantially arc-shaped profile. The third track 15 of the frame unit 1 has a substantially arc-shaped profile.

The wheel unit 2 includes a shaft 22 rotatably mounted on the two bearings B1 and B2 of the frame unit 1, a flywheel 20 having a central portion provided with a hub 21 mounted on the shaft 22 so that the flywheel 20 is rotatable freely on the support frame 10 of the frame unit 1, a plurality of connecting bars 23 each connected between the flywheel 20 and the hub 21, a plurality of support ears 24 each mounted on a respective one of the connecting bars 23, a plurality of swinging weights 25 each pivotally mounted on a respective one of the support ears 24, a plurality of first driving arms 26 each pivotally mounted on a respective one of the support ears 24, a plurality of second driving arms 27 each pivotally mounted on a respective one of the support ears 24, and a plurality of rollers 29 each rotatably mounted on a respective one of the first driving arms 26 and a respective one of the second driving arms 27.

The connecting bars 23 of the wheel unit 2 are arranged in a radiating manner and are equally distant from each other.

Each of the rollers 29 on the respective first driving arm 26 and the respective second driving arm 27 is movable to pass and abut the third track 15 of the frame unit 1 and is movable to pass between and abut the first track 12 and the second track 13 of the frame unit 1 so as to pivot the respective first driving arm 26 and the respective second driving arm 27 and to pivot the respective swinging weight 25.

Each of the first driving arms 26 of the wheel unit 2 is inclined relative to a respective one of the second driving arms 27, with a determined angle (about 120°) being defined between each of the first driving arms 26 and the respective second driving arm 27.

Each of the swinging weights 25 of the wheel unit 2 is movable in concert with a respective one of the first driving arms 26, and is movable in concert with a respective one of the second driving arms 27. Each of the swinging weights 25 of the wheel unit 2 is disposed between the respective first driving arm 26 and the respective second driving arm 27, with a determined angle being defined between each of the swinging weights 25, the respective first driving arm 26 and the respective second driving arm 27.

The wheel unit 2 further includes a plurality of pivot shafts P1 pivotally mounted on a respective one of the support ears 24 for mounting a respective one of the swinging weights 25, a respective one of the first driving arms 26 and a respective one of the second driving arms 27. Each of the pivot shafts P1 of the wheel unit 2 is pivotally mounted on the respective support ear 24 by two bearings B3 and B4. Each of the pivot shafts P1 of the wheel unit 2 has an end provided with an external thread P3.

Each of the swinging weights 25 of the wheel unit 2 is secured on the respective pivot shaft P1 and has an upper end provided with a screw bore 251, and the wheel unit 2 further includes a plurality of locking screw P2 each screwed into the screw bore 251 of a respective one of the swinging weights 25 and each pressing a respective one of the pivot shafts P1 so that each of the swinging weights 25 is locked onto the respective pivot shaft P1. Each of the first driving arms 26 of the wheel unit 2 is secured on the respective pivot shaft P1 and has a first end provided with a screw hole 261 screwed onto the external thread P3 of the respective pivot shaft P1 so that each of first driving arms 26 is locked onto the respective pivot shaft P1. Each of the first driving arms 26 of the wheel unit 2 has a second end connected with the respective roller 29 by a screw R and a washer C. Each of the second driving arms 27 of the wheel unit 2 has a first end secured on the respective pivot shaft P1 by a close fit connection and a second end connected with the respective roller 29 by a screw R.

The wheel unit 2 further includes a plurality of buffering rubbers 28 mounted on the second track 13 of the frame unit 1, the third track 15 of the frame unit 1 and the connecting bars 23 respectively to provide a buffering effect to the swinging weights 25 when the swinging weights 25 are moved to hit the second track 13 of the frame unit 1, the third track 15 of the frame unit 1 and the connecting bars 23 so as to prevent from producing noise due to the hits.

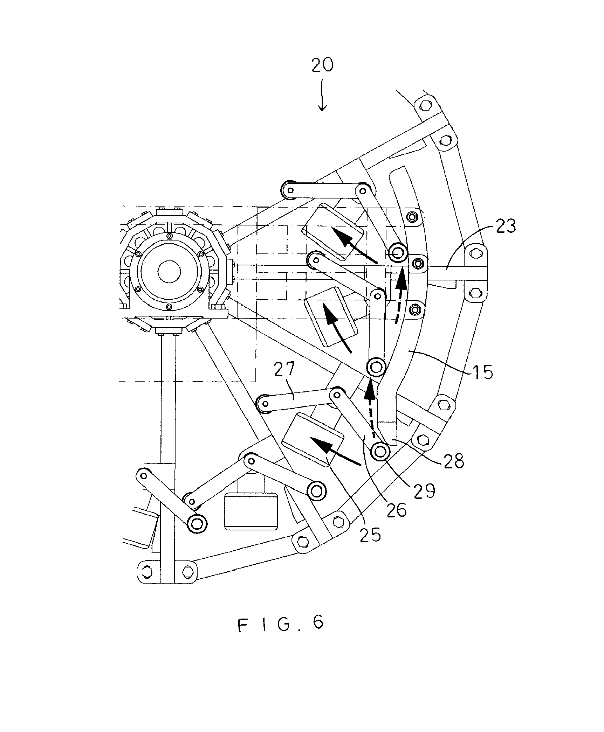

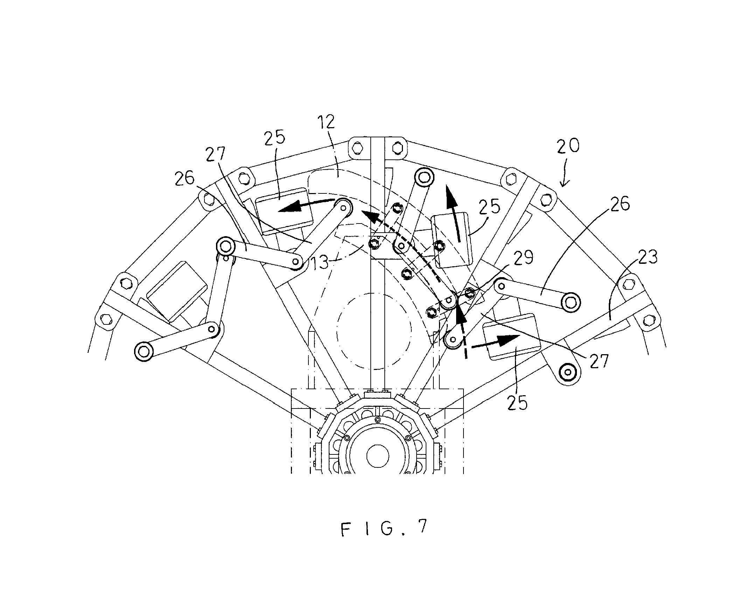

In operation, referring to FIGS. 6 and 7 with reference to FIGS. 1-5, when each of the rollers 29 on the respective first driving arm 26 is moved to pass and abut the third track 15 as shown in FIG. 6, the respective first driving arm 26 is pivoted by guidance of the third track 15, and each of the swinging weights 25 is moved in concert with the respective first driving arm 26, so that the barycenter of each of the swinging weights 25 is deflected inward. In addition, when each of the rollers 29 on the respective second driving arm 27 is moved to pass between and abut the first track 12 and the second track 13 as shown in FIG. 7, the respective second driving arm 27 is pivoted by guidance of the first track 12 and the second track 13, and each of the swinging weights 25 is moved in concert with the respective second driving arm 27, so that each of the swinging weights 25 is turned around. In such a manner, the two sides of the flywheel 20 have different weights so that the two sides of the flywheel 20 form an unbalanced state, and the flywheel 20 is rotated successively by the unbalanced state of the two sides of the flywheel 20.

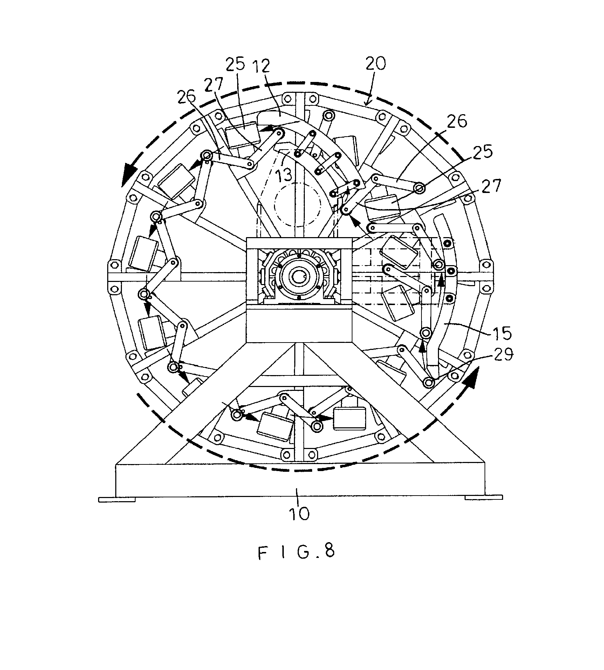

Referring to FIG. 8 with reference to FIGS. 1-7, before each of the rollers 29 on the respective first driving arm 26 enters the first track 12 and the second track 13 (at the right side of the flywheel 20), each of the swinging weights 25 is turned downward, and the barycenter of each of the swinging weights 25 is located at a lower position as shown in FIG. 8, while after each of the rollers 29 on the respective second driving arm 27 leaves the first track 12 and the second track 13 (at the left side of the flywheel 20), each of the swinging weights 25 is turned upward, and the barycenter of each of the swinging weights 25 is located at an upper position as shown in FIG. 8, so that the two sides of the flywheel 20 have different weights (the left side of the flywheel 20 is heavier, and the right side of the flywheel 20 is lighter). In such a manner, the two sides of the flywheel 20 form an unbalanced state, and the flywheel 20 is rotated successively by the unbalanced state of the two sides of the flywheel 20. Thus, the user only needs to apply an initial revolving force on the flywheel 20 so as to rotate the flywheel 20 successively by the unbalanced state at the two sides of the flywheel 20. In the preferred embodiment of the present invention, the flywheel 20 is available for a machine, such as a generator and the like.

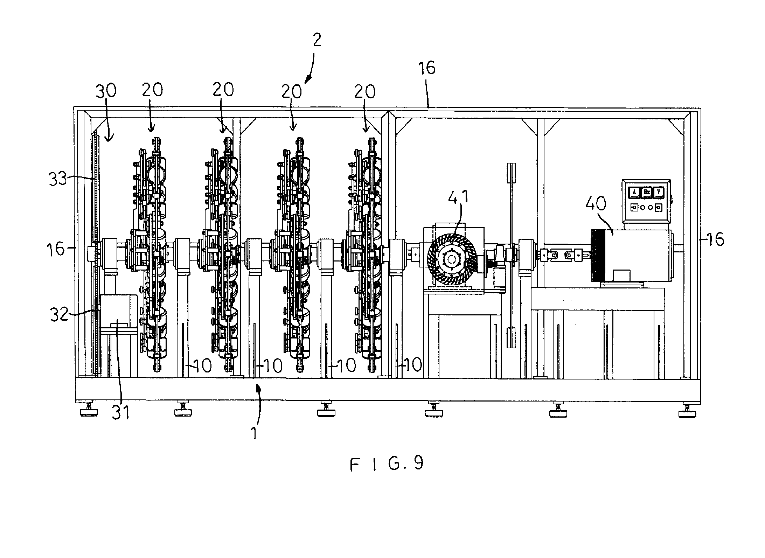

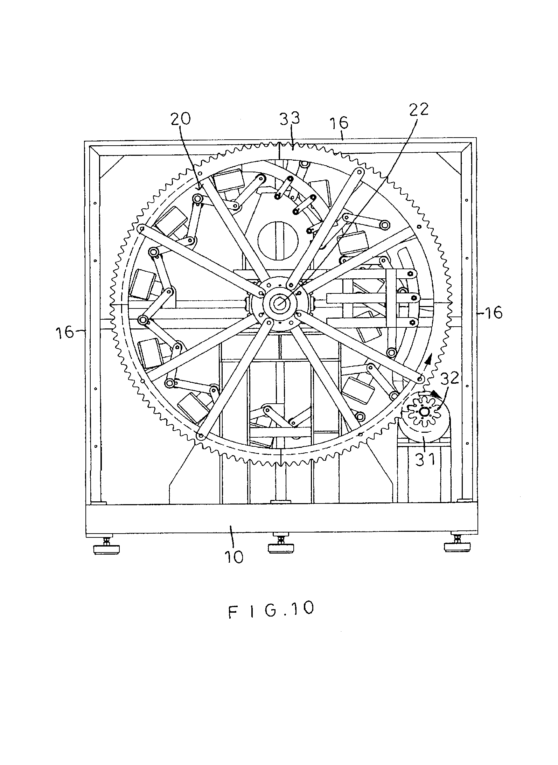

Referring to FIGS. 9 and 10, the torque flywheel device comprises a plurality of frame units 1, a plurality of wheel units 2 each mounted on a respective one of the frame units 1, and a sound insulator 16 surrounding the frame units 1 and the wheel units 2. The wheel units 2 are connected in line with each other to reduce the noise.

For clarity of illustration, the torque flywheel device only comprises a frame unit 1 and a wheel unit 2 mounted on he frame unit 1. The torque flywheel device further comprises a driving mechanism 30 connected with a first end of the shaft 22 of the wheel unit 2, a reduction box 41 connected with a second end of the shaft 22 of the wheel unit 2, and a generator 40 connected with the reduction box 41. The driving mechanism 30 includes a driven gear 33 connected with the first end of the shaft 22 of the wheel unit 2 to rotate the shaft 22 and the flywheel 20 of the wheel unit 2, a drive motor 31 connected with the generator 40, and a drive gear 32 mounted on the drive motor 31 and meshing with the driven gear 33 to rotate the driven gear 33. The generator 40 supplies a partial electric power to operate the drive motor 31.

When in use, when the drive motor 31 is energized by the generator 40, the drive gear 32 is rotated by the drive motor 31 to rotate the driven gear 33 which drives the flywheel 20 of the wheel unit 2 so that the flywheel 20 begins to rotate. After the flywheel 20 is rotated, the flywheel 20 is rotated successively by the unbalanced state at the two sides of the flywheel 20 to produce a larger torque and power. Then, the power of the flywheel 20 is reduced by the reduction box 41 and is supplied into the generator 40 to drive and operate the generator 40.

In conclusion, the flywheel 20 cannot be rotated by itself, but the flywheel 20 can be rotated by a smaller power that is supplied by the drive motor 31. Thus, the flywheel 20 can be rotated by a smaller power from the drive motor 31, and can produce a larger torque and power by the unbalanced state at the two sides of the flywheel 20 so as to drive and operate the generator 40. In addition, the generator 40 supplies a partial electric power to operate the drive motor 31.

Accordingly, the two sides of the flywheel 20 have different weights to form an unbalanced state so that the flywheel 20 is rotated successively by the unbalanced state of the two sides of the flywheel 20. In addition, the flywheel 20 is rotated without needing an external electric supply or an external power so that the torque flywheel device can save the power and energy. In addition, the flywheel 20 can be rotated by a smaller power from the drive motor 31 to rotate successively and produce a larger torque and power by the unbalanced state at the two sides of the flywheel 20 so as to drive and operate the generator 40.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A torque flywheel device, comprising: at least one frame unit (1); and at least one wheel unit (2) mounted on the frame unit; wherein the frame unit includes:
a support frame (10); two bearings (B1; B2) mounted on the support frame; a first fixing bracket (11) mounted on a front of the support frame; a first track (12) mounted on a top of the first fixing bracket; a second track (13) mounted on the top of the first fixing bracket and located under the first track; a second fixing bracket (14) mounted on a side of the support frame; and a third track (15) mounted on an outer side of the second fixing bracket; the wheel unit includes: a shaft (22) rotatably mounted on the two bearings of the frame unit;
a flywheel (20) having a central portion provided with a hub (21) mounted on the shaft so that the flywheel is rotatable freely on the support frame of the frame unit; a plurality of connecting bars (23) each connected between the flywheel and the hub; a plurality of support ears (24) each mounted on a respective one of the connecting bars; a plurality of swinging weights (25) each pivotally mounted on a respective one of the support ears; a plurality of first driving arms (26) each pivotally mounted on a respective one of the support ears; a plurality of second driving arms (27) each pivotally mounted on a respective one of the support ears; and a plurality of rollers (29) each rotatably mounted on a respective one of the first driving arms and a respective one of the second driving arms; the torque flywheel device further comprises: a driving mechanism (30) connected with a first end of the shaft of the wheel unit; a reduction box (41) connected with a second end of the shaft of the wheel unit; and a generator (40) connected with the reduction box; the driving mechanism includes: a driven gear (33) connected with the first end of the shaft of the wheel unit to rotate the shaft and the flywheel of the wheel unit; a drive motor (31) connected with the generator; and a drive gear (32) mounted on the drive motor and meshing with the driven gear to rotate the driven gear;
the generator supplies a partial electric power to operate the drive motor; each of the rollers on the respective first driving arm and the respective second driving arm is movable to pass and abut the third track of the frame unit and is movable to pass between and abut the first track and the second track of the frame unit so as to pivot the respective first driving arm and the respective second driving arm and to pivot the respective swinging weight.

2. The torque flywheel device of claim 1, wherein the wheel unit further includes a plurality of pivot shafts (P1) pivotally mounted on a respective one of the support ears for mounting a respective one of the swinging weights, a respective one of the first driving arms and a respective one of the second driving arms; each of the pivot shafts of the wheel unit is pivotally mounted on the respective support ear; each of the pivot shafts of the wheel unit has an end provided with an external thread (P3); each of the swinging weights of the wheel unit is secured on the respective pivot shaft and has an upper end provided with a screw bore (251); the wheel unit further includes a plurality of locking screw (P2) each screwed into the screw bore of a respective one of the swinging weights and each pressing a respective one of the pivot shafts so that each of the swinging weights is locked onto the respective pivot shaft; each of the first driving arms of the wheel unit is secured on the respective pivot shaft and has a first end provided with a screw hole (261) screwed onto the external thread of the respective pivot shaft so that each of first driving arms is locked onto the respective pivot shaft; each of the first driving arms of the wheel unit has a second end connected with the respective roller; each of the second driving arms of the wheel unit has a first end secured on the respective pivot shaft and a second end connected with the respective roller.

3. The torque flywheel device according to any of the preceding claims, wherein the first track of the frame unit has a substantially arc-shaped profile; the second track of the frame unit has a substantially arc-shaped profile; the third track of the frame unit has a substantially arc-shaped profile; each of the first driving arms of the wheel unit is inclined relative to a respective one of the second driving arms, with a determined angle being defined between each of the first driving arms and the respective second driving arm; each of the swinging weights of the wheel unit is movable in concert with a respective one of the first driving arms, and is movable in concert with a respective one of the second driving arms; each of the swinging weights of the wheel unit is disposed between the respective first driving arm and the respective second driving arm; the wheel unit further includes a plurality of buffering rubbers (28) mounted on the second track of the frame unit, the third track of the frame unit and the connecting bars respectively to provide a buffering effect to the swinging weights when the swinging weights are moved to hit the second track of the frame unit, the third track of the frame unit and the connecting bars.

4. The torque flywheel device according to any of the preceding claims, wherein the torque flywheel device comprises a plurality of frame units and a plurality of wheel units each mounted on a respective one of the frame units; the wheel units are connected in line with each other.

5. The torque flywheel device according to any of the preceding claims, further comprising a sound insulator (16) surrounding the frame unit and the wheel unit.
